# EUROPEAN PATENT SPECIFICATION

(11) **EP 0 614 682 B1**
(45) Date of publication and mention of the grant of the patent: **24.11.1999**
(21) Application number: 94103591.7
(22) Date of filing: 09.03.1994
(51) Int. Cl.: A62D 3/00, B01J 21/06, C02F 1/32

(54) **Method for removing pollutants**
Verfahren zur Schadstoffbeseitigung
Procédé pour éliminer des polluants

(30) Priority: 11.03.1993 JP 7774693
(43) Date of publication of application: 14.09.1994
(73) Proprietor: FUJI ELECTRIC CO., LTD., Kawasaki-shi Kanagawa 210 (JP); AGENCY OF INDUSTRIAL SCIENCE AND TECHNOLOGY, Tokyo 100 (JP)
(72) Inventor: Ibusuki, Takashi, Tsukuba-shi, Ibaraki (JP); Takeuchi, Koji, Tsukuba-shi, Ibaraki (JP); Shinkai, Kazuteru, c/o Fuji Electric Co., Ltd., Kawasaki-shi, Kanagawa (JP); Nishikata, Satoshi, c/o Fuji Electric Co., Ltd., Kawasaki-shi, Kanagawa (JP); Miyamoto, Masahiro, c/o Fuji Electric Co., Ltd., Kawasaki-shi, Kanagawa (JP); Noguchi, Yukihiro, c/o Fuji Electric Co., Ltd., Kawasaki-shi, Kanagawa (JP); Takahashi, Takeo, c/o Fuji Electric Co., Ltd., Kawasaki-shi, Kanagawa (JP)
(74) Representative: Blumbach, Kramer & Partner GbR

(56) References cited:
- EP-A- 0 499 362
- US-A- 4 966 665
- US-A- 5 182 030
- PATENT ABSTRACTS OF JAPAN vol. 014, no. 314 (C-0737)5 July 1990 & JP-A-02 107 314 (AGENCY OF IND SCIENCE & TECHNOL) 19 April 1990
- PATENT ABSTRACTS OF JAPAN vol. 016, no. 010 (M-1199)13 January 1992 & JP-A-03 233 100 (AGENCY OF IND SCIENCE & TECHNOL;OTHERS: 01) 17 October 1991
- DATABASE WPI Section Ch, Week 9104, Derwent Publications Ltd., London, GB; Class E36, AN 89-296636 & JP-A-3 233 100 (AGENCY OF IND SCI TECH (FJIE ) FUJI ELECTRIC MFG KK) 31 August 1989

## Description

The present invention relates to a method for removing low-concentration pollutants (nitrogen oxides and the like) in the environmental atmosphere and pollutants (volatile organic chlorine compounds and the like) in water.

In order to control air pollution due to nitrogen oxides and the like, regulations have been effected up to now against emission of pollutants from mobile and stationary emission sources. However, in spite of measures against these emission sources, high-concentration pollutants exceeding the environmental standards are still observed in big cities and along car roads. Therefore, more effective measures against the individual pollutions, that is, in addition to measures against emission sources as ever, environmental measures at the pollutant receiving side are in demand.

However, removal of pollutants in environment (environmental purifying) is partly being tried in the field of water purifying of lakes and the like, but no attempt has been made on the atmospheric environment.

This is because efficient removal has been considered to be difficult since air pollutants are very low in concentration and rapidly diffusing in the atmosphere. For example, when the conventional selective catalytic reduction method with ammonia is applied to the atmosphere, high-rate concentration is essentially required before reduction, which has been impracticable in view of energy consumption.

The document "Patent Abstracts of Japan Vol. 14 (1990), No. 314" discloses a process for the removal of pollutants from exhaust gases wherein the pollutant-containing exhaust gas is passed through a device consisting of two coaxially arranged pyrex glas tubes. On the outer surface of the inner glas tube, titanium dioxide was deposited. While the gas was passing the device, it was exposed to light of a wavelength of not more than 400 nm, whereby the gas was decomposed to compounds less harmful than the pollutants.

The document "Patent Abstracts of Japan Vol. 16 (1992), No. 010" discloses a device for removing pollutants from air in motorway tunnels which device consists of a glas tube to the outer surface of which titanium dioxide, charcoal and ferric oxide as powders are adhered. When irradiating said device with light of wavelengths of 300 to 400 nm, the noxious gases in the air of said tunnel adhere to the outer surface of the device.

US-A 5,182,030 discloses a method of removing organic pollutants from fluids by passing said fluids through an absorbent which is capable of absorbing said organic pollutants and by destructing the absorbed organic material to regenerate the absorbent. The absorbent preferably is granulated activated carbon, while the regeneration preferably is carried out by catalytic oxidation in the presence of a metal catalyst and an energy source which may be light.

Therefore, a primary object of the present invention is to provide a method for removing air pollutants from the atmosphere which efficiently removes low-concentration pollutants from the ambient atmosphere and is highly practical in the economic point of view based on the use of the low cost material and no need for running cost.

On the other hand, volatile organic chlorine compounds such as trichloroethene and tetrachloroethene are used in large amounts as degreasing agents and cleaning agents in various industrial fields. However, these volatile Organic chlorine compounds are said to be carcinogenic, and environmental pollution such as pollution of drinking water due to these substances is a social problem.

Therefore, another object of the present invention is to provide a method for removing pollutants which decomposes volatile organic chlorine compounds contained in water into harmless substances by a simple process.

There is provided a method for removing one or more pollutant(s) selected from the group consisting of NOₓ, SOₓ, and organic chlorinated compounds from fluids, wherein said pollutant(s) are photocatalytically contacted with a purifying material comprising a photocatalyst mainly consisting of titanium dioxide or a mixture of titanium dioxide and activated charcoal by exposure to radiation having a wavelength of 400 nm or less to decompose said pollutant(s), said purifying material consisting of a powder of said photocatalyst formed to a sheet, a rolled sheet or a panel with a fluororesin as the binder.

Here, the purifying material may be a sheet-shaped or panel-shaped material obtained by molding a powder of the photocatalyst with a synthetic resin.

The purifying material may be obtained by sticking a powder of the photocatalyst on the surface of a sheet-shaped or panel-shaped synthetic resin with an adhesive.

In the second aspect of the present invention, said method is a method, wherein said pollutant(s) is/are present in water in a volatile form and is/are removed by the steps of
- transferring said pollutant(s) from the water phase into a gas phase; and
- contacting said gas phase with said purifying material while exposing it to said radiation to decompose said pollutant(s).

The purifying material may be a sheet-formed or panel-formed material obtained by molding a powder of the photocatalyst with a synthetic resin.

The purifying material may be obtained by sticking a powder of the photocatalyst on the surface of a sheet-formed or panel-formed synthetic resin with an adhesive.

In the third aspect of the present invention, a method for removing pollutants comprises:
contacting water containing said pollutants with a purifying material fixed with a photocatalyst mainly comprising titanium dioxide or a mixture of titanium dioxide and activated charcoal while irradiating it with light of 400 nm or less in wavelength to decompose the pollutants.

The purifying material may be a sheet-shaped or panel-shaped material obtained by molding a powder of the photocatalyst with a synthetic resin.

The purifying material may be obtained by sticking a powder of the photocatalyst on the surface of a sheet-formed or panel-formed synthetic resin with an adhesive.

As said purifying material, there may be used
a powder of a photocatalyst mainly comprising titanium dioxide or a mixture of titanium dioxide and activated charcoal and a synthetic resin, and molded to a sheet or panel.

The synthetic resin may be fluororesin.

Preferably, a purifying material comprises:
a sheet-shaped on panel-shaped substrate, and
a powder of a photocatalyst mainly comprising titanium dioxide or a mixture of titanium dioxide and activated charcoal, which is stuck on the substrate with an adhesive.

The sheet-shaped or panel-shaped substrate may comprise a metal, a resin, or an inorganic substance.

The inventors have invented a photocatalyst (Japanese Patent No. 1613301) comprising titanium dioxide (TiO₂) and activated charcoal which, by irradiation of light of 300 nm to 400 nm in wavelength, can efficiently remove nitrogen oxides and the like of the ppm level concentration in the air at room temperature without pretreatment, and have developed a technology for applying the photocatalyst in treating tunnel exhaust (Japanese Patent Application Laying-open No. 3-233100 and three other applications). The inventors have also found that the photocatalytic activity can be further improved by adding a third component such as iron (III) oxide or the like.

The only condition necessary for functioning the photocatalyst is irradiation with light at room temperature and rinsing with water. Then, paying attention to the fact that irradiation with sunlight and rinsing by rainfall can be achieved relatively easily in outdoor natural environment, the inventors have accomplished the present invention.

Specifically, in the present invention, a photocatalyst mainly comprising titanium dioxide or a mixture of titanium dioxide and activated charcoal is fixed in the outdoors and contact with air so that the catalyst can be irradiated with sunlight and rinsed by rainfall, thereby removing pollutants in the environmental atmosphere.

Fixing the photocatalyst is preferably achieved by molding a powder of the photocatalyst into a sheet or panel using a synthetic resin previously, or by sticking the photocatalyst on the surface of a sheet or panel with an adhesive.

Further, the inventors have developed a technology for decomposing volatile organic chlorine compounds into harmless substances by irradiating exhaust gas containing the volatile organic chlorine compounds with light in the presence of titanium dioxide (Japanese Patent Application Laying-open No. 2-107314), and the above purifying material is also suitable for treating the pollutants in water using the same technology.

Specifically, in the present invention, volatile pollutants in water are transferred into a gas phase, and the gas phase is contacted with the above purifying material while irradiating it with light of 400 nm or less in wavelength to decompose the volatile pollutants.

Further, in the present invention, water containing pollutants is contacted with the above purifying material while irradiating it with light of 400 nm or less in wavelength to decompose the pollutants.

Sunlight is rich in ultraviolet rays of 300 to 400 nm in wavelength which are necessary for activating the present photocatalyst. Therefore, by placing the photocatalyst of the present invention in the outdoors applied with sunlight, low-concentration nitrogen oxides and the like in the atmosphere can be oxidized into nitric acid and the like, which is caught on the photocatalyst. The activity of the photocatalyst gradually decreases with time mainly due to the fact that active sites on the surface are covered by oxidation products such as nitric acid and the like, but the activity is restored by washing out the products by rainfall. Thus, the photocatalyst repeatedly functions, and therefore requires no work or cost for operation and maintenance.

To increase the contact surface area of the photocatalyst with air, it is preferable to use a powder of the photocatalyst. In the practical application of the present invention, when the powder is to be contacted with air, there are problems of scattering of the photocatalyst during the installation, use, reactivation, replacement, and the like, and it is necessary to fix the photocatalyst to a medium.

A method for fixing the photocatalyst is adherence of the photocatalyst to the surface of a structure and the like with an adhesive. However, in this case, when the photocatalyst in the granular form is stuck directly on the surface of the structure, various difficulties are considered to occur in the work, and the construction cost will be high.

Therefore, it is practical that the photocatalyst is previously formed in the factory to a sheet or panel, and the product is stuck on the structure in the field.

So far, it has been common that a powder-formed catalyst is molded with a binder, and then fired at a high temperature to obtain a desired shape. However, it is impossible to fire the photocatalyst containing activated charcoal at high temperatures of above 300°C, and the photocatalyst, which is reactivated using water, cannot be applied in view of the water resistance.

That is, to fix the photocatalyst stably, it is required that an excessively high temperature is not used in the production process (preferably below 200°C), and the photocatalyst has sufficient water resistance and durability.

On the other hand, fluorocarbon polymers, such as polytetrafluoro ethylene, which is superior in chemical and environmental resistance, can be formed from a powder to a desired shape by applying a pressure. Therefore, a powder of fluororesin mixed with a photocatalyst powder can be previously rolled to obtain a sheet- or panel-shaped purifying material.

Since fluororesin is hydrophobic, the resulting purifying material is expected to be highly water resistant and less affected by moisture. Further, since fluororesin is low in affinity for the component constituting the photocatalyst, both substances are merely aggregated in the purifying material, and the activity on the surface of the photocatalyst is expected to be less affected by the presence of fluororesin.

It is further possible that the photocatalyst is stuck on a sheet or panel made of metals, resins, inorganic substances, or the like with an adhesive to form the purifying material. However, since there are various types and properties of the adhesive, it is necessary to select a most suitable adhesive experimentally.

In practical application of the technology described in Japanese Patent Application Laying-open No. 2-107314, when volatile pollutants in water are transferred to a gas phase and brought into contact with titanium dioxide, if titanium dioxide particles are stuck directly on the wall surface of the equipment, as previously described for removing pollutants from the atmosphere, various difficulties will occur in the construction. Then, also in this case, titanium dioxide particles can be carried on a sheet- or panel-shaped purifying material, thereby making the work and handling very easy.

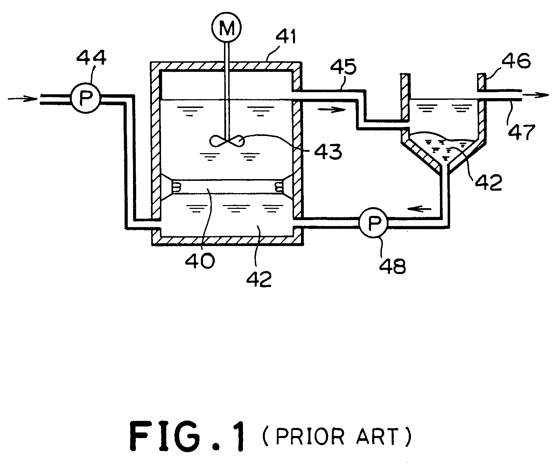

Pollutants in water can be decomposed when it is contacted with titanium dioxide in an untreated state, however, various problems will be caused when granular titanium dioxide is used. Fig. 1 shows an example of an apparatus for contacting water containing pollutants directly with titanium dioxide particles. Referring to the figure, water suspending titanium dioxide particles 42 is contained in a reactor 41 having a light source 40 for emitting light of 400 nm or less in wavelength, and stirred by an impeller 43. Water containing volatile organic chlorine compounds is fed by a pump 44 from the bottom of the reactor 41, and the volatile organic chlorine compounds contained therein are contacted with the titanium dioxide particles 42 to be decomposed. Treated water is sent through an overflow pipe 45 to a precipitation tank 46, where titanium dioxide particles 42 are separated and discharged from a discharge pipe 47. Titanium dioxide particles precipitated in the precipitation tank 46 are returned by a pump 48 to the reactor 41.

However, in this method which uses titanium dioxide in the granular form, the precipitation tank for separating titanium dioxide particles from treated water and the pump piping for returning the separated titanium dioxide particles to the reactor are required, as shown in the figure. As described above, this makes the apparatus complex in structure, and necessarily requires tedious operation control. On the contrary, when titanium dioxide particles are carried on the purifying material, the above problems can be solved and the apparatus is simple in structure since the titanium dioxide particles are fixed.

The above and other objects, effects, features and advantages of the present invention will become more apparent from the following description of embodiments thereof taken in conjunction with the accompanying drawings.
Fig. 1 is a schematic view showing a prior art apparatus for decomposing pollutants in water using a granular photocatalyst;
Fig. 2 is a schematic view showing the structure of an experimental apparatus for demonstrating a pollutant removing effect of the present invention;
Fig. 3 is a schematic cross sectional view showing an embodiment of a purifying material according to the present invention;
Fig. 4 is a diagram showing a nitrogen monoxide removing effect of a sheet-shaped purifying material sample comprising a photocatalyst powder and a synthetic resin;
Fig. 5 is a diagram showing the relationship between a nitrogen monoxide initial concentration and an NO removal of a sheet-formed purifying material sample;
Fig. 6 is a schematic cross sectional view showing another embodiment of a purifying material according to the present invention;
Fig. 7 is a diagram showing a nitrogen monoxide removing effect of a sheet-shaped purifying material comprising a photocatalyst powder and a synthetic resin;
Fig. 8 is a diagram showing a nitrogen dioxide removing effect of a sheet-shaped purifying material comprising a photocatalyst powder sticked on the surface of a panel-shaped synthetic resin;
Fig. 9 is a diagram showing a nitrogen dioxide removing effect of a sheet-shaped purifying material comprising a photocatalyst powder and a synthetic resin;
Fig. 10 is a schematic cross sectional view showing the purifying material of the present invention stuck on the wall surface of a building;
Fig. 11 is a schematic cross sectional view showing the purifying material of the present invention stuck on a sound insulation plate of a highway;
Fig. 12 is a schematic perspective view showing the purifying material of the present invention disposed alone;
Fig. 13A is a schematic front view showing the purifying material of the present invention used in a highway tunnel;
Fig. 13B is a schematic cross sectional view showing the purifying material at the present invention used in a highway tunnel;
Fig. 14 is a schematic view showing the apparatus of an embodiment for decomposing volatile pollutants transferred from water to a gas using the purifying material of the present invention;
Fig. 15 is a schematic view of the structure of an apparatus showing an embodiment for decomposing pollutants in water using the purifying material of the present invention.

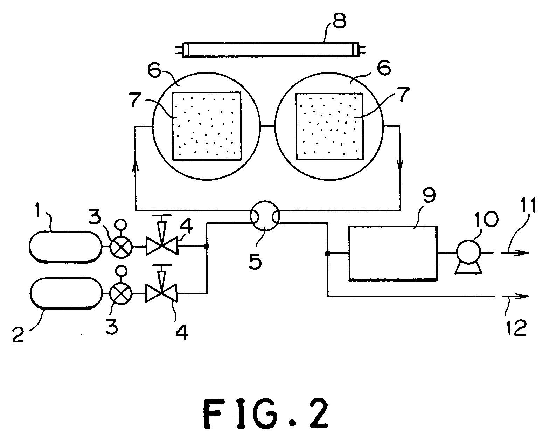

Fig. 2 shows the structure of an experimental apparatus used in an indoor experiment which will be described later, in which a cylinder 1 containing a standard gas (about 50 ppm in concentration) of pollutants (nitrogen monoxide in this case) and a cylinder 2 containing pure air for diluting the standard gas are individually connected to a precision flow controller 4 through a pressure regulator valve 3 and a petri dish type glass 6 through a 4-way valve 5. A purifying material sample 7 is disposed in the reactor 6, and the purifying material sample 7 is irradiated with light from photochemifluorescent lamps (10W x 3) 8. Two units of the reactor 6 are disposed in series, and the purifying material sample 7 is dividedly disposed therein. The gas fed to the reactor 6 is sent to an exhaust port 12 through the 4-way valve 5, a chemiluminescent nitrogen oxide meter 9 and an air pump 10 are connected halfway, and the gas passed through the chemiluminescent nitrogen oxides meter 9 is discharged from an exhaust port 11 through the air pump 10.

In the apparatus shown, the standard gas of the cylinder 1 and air of the cylinder 2 can be mixed in an appropriate flow ratio controlled by the flow controller 4 to generate a simulation polluted air of a desired low concentration. By changing over the 4-way valve 5 as shown, the simulation polluted air is conducted at a predetermined flow rate to the reactor 6 to contact the sample 7 and, at the same time, while the sample 7 is irradiated with 300-400 nm near-ultraviolet light from the fluorescent lamp 8.

A predetermined amount of the polluted air contacted with the sample 7 (treated air) is conducted to the nitrogen oxides meter 9 by the air pump 10, and after changes in nitrogen oxide concentration are recorded, the treated water is discharged from the exhaust port 11. Excess air is discharged directly from the exhaust port 12.

Results of experiments using the above apparatus, for confirming the pollutant removing effect of the purifying material according to the present invention and results obtained by placing the same purifying material sample in the actual atmosphere and contacting it with air will be described.

### Experiment 1

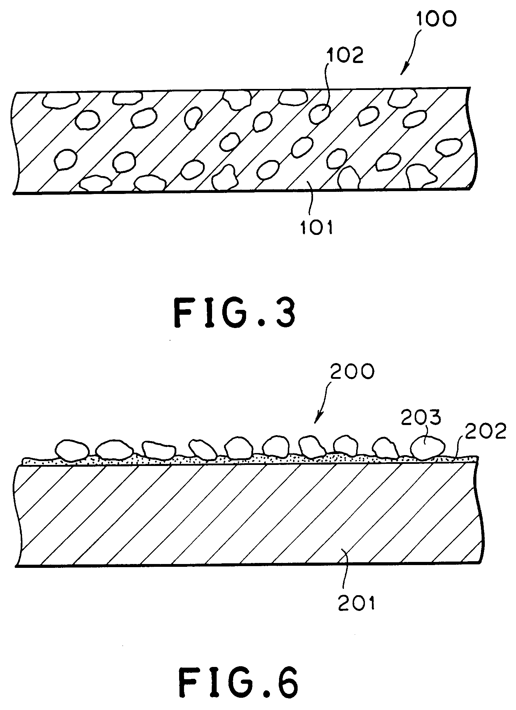

Fig. 3 is a schematic cross sectional view showing an embodiment of a purifying material. The purifying material 100 comprises a synthetic resin 101 and a photocatalyst powder 102.

The photocalalyst 102 and fluororesin particles were thoroughly mixed, and rolled to a 1 mm thick sheet. The sheet had a composition of polytetrafluoroethylene : titanium dioxide : activated charcoal = 6:3:1. Iron (III) oxide may be added in an amount of 2% based on the weight of the catalyst ingredients. Further, the catalyst ingredient may be titanium dioxide alone. However, in this case, the effect is slightly lowered. The sheet was cut into a size of 10 cm x 10 cm to obtain a sample, and each one sheet was contained in the two reactors 6 (effective area: 200 cm²). The initial concentration of nitrogen monoxide (NO) fed to the reactor 6 was 1.0 ppm, and the air flow rate was 0.5 liter per minute. The ultraviolet intensity at wavelength 365 nm was a maximum of 0.45 mW/cm². This ultraviolet intensity corresponds to about 1/4 that in daytime of a fair day in summer, and to a half that of a fair day in winter.

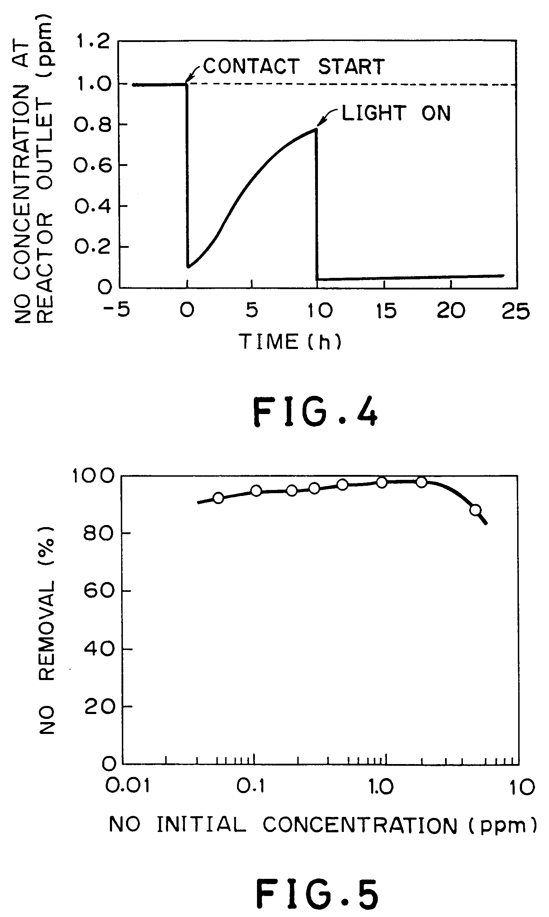

Fig. 4 shows changes in NO concentration of treated air at an outlet of the reactor 6. The ordinates of the figure indicates an NO concentration at the outlet of the reactor 6 and the abscissas indicates a time after the beginning of treatment. Referring to the figure, when irradiation is not made initially, and the 4-way valve 5 is changed over to feed the simulation polluted air to the reactor 6, the NO concentration at the outlet decreases. This is because the photocatalyst contains activated charcoal but, since the removing mechanism at this moment is merely an absorption, the effect does not continue for a long time (however, this function can be utilized in the night where no sunlight is applied).

After about 9 hours, when irradiation is begun, the NO concentration at the outlet decreased again considerably. Since this removing effect continues for a long time, it was considered as due to a photocatalytic action, rather than a mere absorption.

In this case, the removing rate when the NO initial concentration is varied is shown in Fig. 5. The ordinates of the figure indicates an average removal (%) from the beginning of treatment to 12 hours, and the abscissas indicates an NO initial concentration of the simulation air supplied. As can be seen from the figure, at an air flow rate of 0.5 liter per minute, a removal exceeding 90% is obtained over the initial concentration range tested (0.05 to 5 ppm). The removal does not substantially depend on the NO initial concentration.

When the tested sample was washed with pure water, nitric acid in an amount of 60% of removed NO was recovered. Further, when the sample was washed with a weak alkaline solution (1 mM sodium hydroxide), the recovery was improved to 80%. However, for the removal of nitrogen oxides, the original activity was restored by washing with water only, showing that repeated use is possible.

Then, experiments were conducted in Tsukuba City (considered to be a non-polluted area) where the above sample was placed outdoors. Of several experiments, a typical value of nitrogen oxides washed out and recovered as nitric acid was 7 µmol per day. Considering a normal water washing recovery rate (60%), this indicates that 11.7 µmol per day (0.5 µmol per hour) of nitrogen oxides was removed.

When this value is applied to the result of indoor experiment, it corresponds to an amount removed when 1.0 ppm NO is flowed at a rate of 2.0 liters per minute for 3 hours. When the average NO concentration in Tsukuba City is assumed as 0.025 ppm, the sample placed in the outdoors could treat about 10 liters of air for 24 hours. That is, it was demonstrated that in the outdoors, pollutants are efficiently transported by wind onto the sheet surface, and the photocatalyst of the present invention functions efficiently in the open system.

Since 1 mol of NO is 30 g, and 1 mol of NO₂ (nitrogen dioxide) is 46 g, 1 mol of nitrogen oxides is an average of 38 g, and 1 µmol is 38 µg.

### Experiment 2

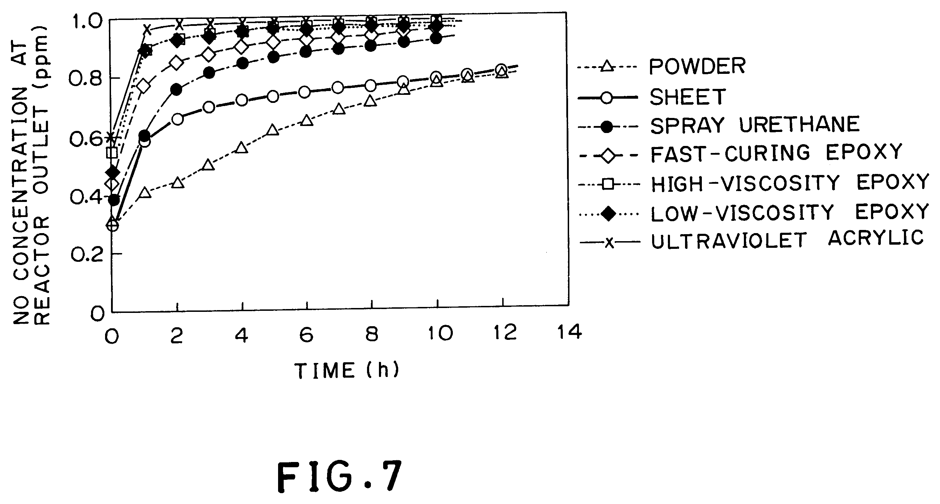

Fig. 6 is a schematic cross sectional view showing another embodiment of a purifying material. The purifying material 200 comprises a polyvinyl chloride plate 201, an adhesive resin 202 and a photocatalyst powder 203.

The polyvinyl chloride plate 201 was coated with a adhesive resin 202 which is selected from various adhesive resins (high-viscosity epoxy resin, low-viscosity epoxy resin, ultraviolet curing acrylic resin, high-viscosity fast-curing epoxy resin, and spray polyurethane resin), then sprinkled over with a photocatalyst powder 203, after curing, washed with water, and dried to obtain the purifying material 200. Each sample had an effective surface area of 100 cm². As in Experiment 1, the nitrogen monoxide initial concentration was 1.0 ppm, and the air flow rate was 0.5 liter per minute.

Fig. 7 shows changes over time in NO concentration at the outlet of the reactor 6. For reference, results of a sample in which the photocatalyst powder, as it is, is fixed to a synthetic resin film using a double-face sticky tape (effective surface area: 200 cm²) and a results of sample in which the photocatalyst of the same amount is formed to a sheet using a synthetic resin (effective surface area: 20 cm²) are also shown in the figure.

Although fixing with a synthetic resin gives worse results than sticking of the powder and the sheet-shaped material, some epoxy resins and polyurethane resins are considered to be usable as a fixing material.

In the figure, the sample in which the photocatalyst is fixed in the powder form (△ mark) shows the highest removing rate. Since a sheet (○ mark) using the same catalyst amount as above is smaller in the surface area than Experiment 1 (therefore, the sheet also has an effect to increase the amount of photocatalyst per unit area), it has no remarkable removing effect as shown in Fig. 1, and slightly inferior in the photocatalytic activity, but the catalyst surface is not covered with the resin so much, rather polluted air is well diffused to the inside of the sheet compared to the case using the adhesive resin.

This is apparent from the fact that no difference is noted after 12 hours from the beginning of treatment. This indicates that although diffusion of polluted air to the inside of the fluororesin sheet takes a time, not only the photocatalyst on the sheet surface, but the photocatalyst at the inside also functions.

### Experiment 3

While the above experiments have shown for the NO removing effect, the photocatalyst of the present invention can also remove nitrogen dioxide (NO₂) and sulfur dioxide (SO₂) as well.

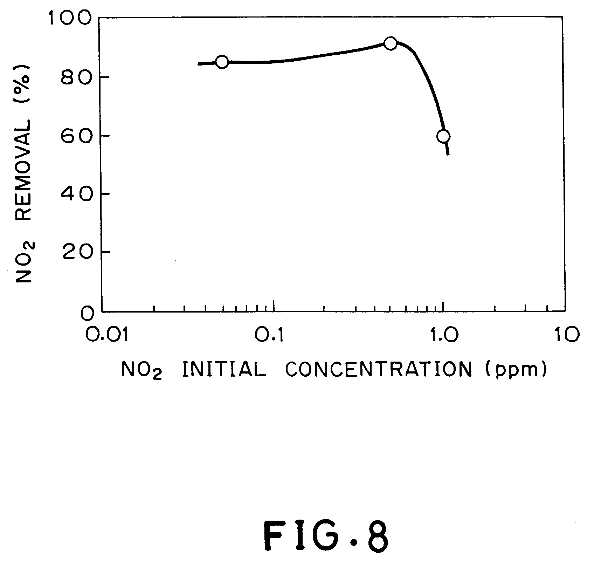

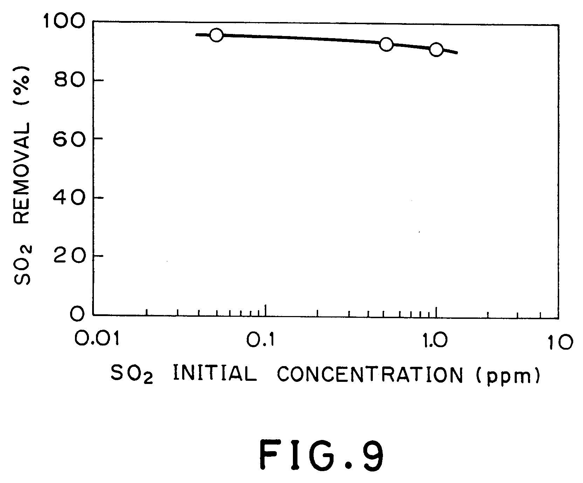

Fig. 8 and Fig. 9 individually show changes in NO₂ and SO₂ removal (12 hours average) at different initial concentrations using the sheet-shaped purifying material of Experiment 1 (under the same experimental conditions, effective area of the sample: 200 cm², and flow rate of the simulation polluted air: 0.5 liter per minute). As shown in the figures, NO₂ was removed with a removal of over 80% at concentrations of 0.05 to 0.7 ppm, and SO₂ was removed with a removal of over 90% at concentrations of 0.05 to 1.0 ppm.

From the above experimental results, it can be seen that the purifying material of the present invention can be expected to be attached to structures and the like to achieve of the purifying environmental atmosphere, and practical application of the purifying material will be described.

When the photocatalyst powder is fixed using a synthetic resin, a sheet or panel-shaped air purifying material is produced by the following process.

First, a powder of the photocatalyst (titanium dioxide or a mixture of titanium dioxide and activated charcoal, or to which an iron-based metal oxide such as iron oxide is further added) is mixed with a solvent and a surface active agent (surfactant). The solvent in this case improves dispersion of the photocatalyst powder, and the surfactant even further promotes the function of the solvent.

Then, a resin powder as a binder such as fluororesin is added, and again thoroughly mixed. The mixture is then centrifuged to remove the solvent, thoroughly kneaded, and press formed in a mold to obtain a 0.5-1 mm thick sheet.

The sheet is back coated with a resin film or stuck on a plate of stainless steel, resins, gypsum, or the like to produce a flexible sheet-shaped or rigid panel-shaped purifying material. The size ranges from a post card size to a tatami size, and the sheet-formed material can also be rolled.

To fix the photocatalyst powder with an adhesive, a resin film or a metal or resin plate is coated with an adhesive, sprinkled over with the catalyst powder, dried to obtain a sheet- or panel-shaped purifying material. The shape and size may be the same as in compression molding.

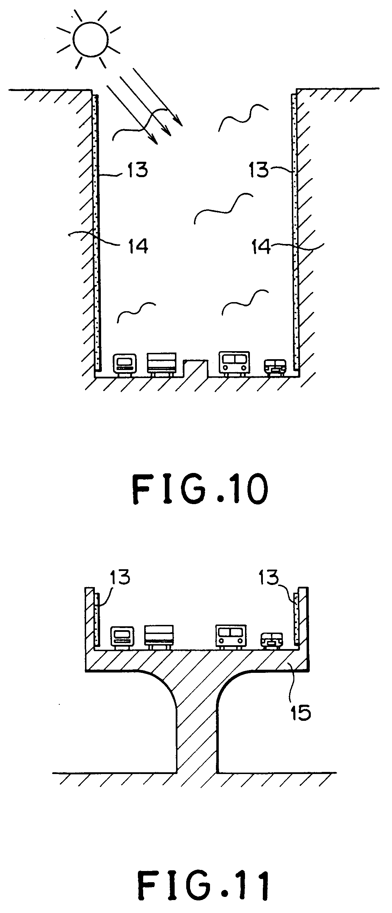

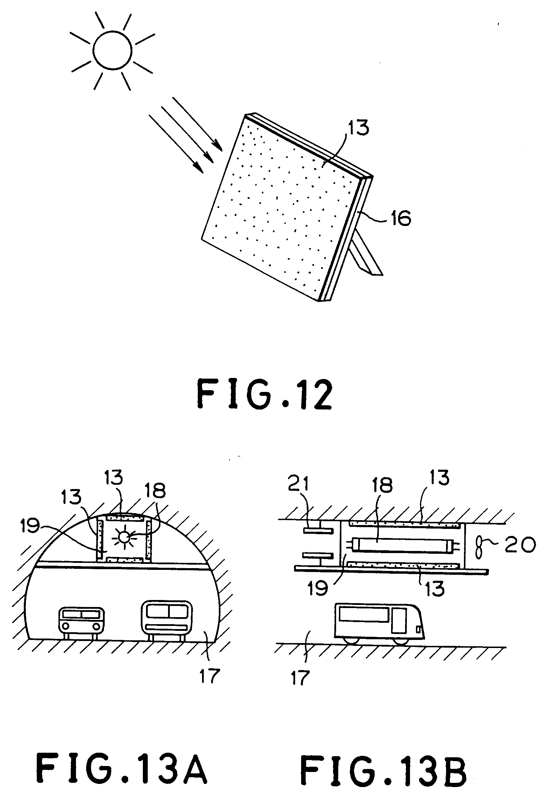

The above purifying material is set up in a street or highway with considerable air pollution in consideration of sunlight and cleaning by rainfall. Fig. 10 shows an example in which a purifying material 13 is attached to an exterior wall of a building 14, and Fig. 11 shows an example in which the purifying material is attached to sound insulation plates on both sides of a highway 15. Thus, the purifying material is efficiently set utilizing existing buildings or structures, and it is of course possible to support the purifying material 13 on a dedicated pedestal 16, as shown in Fig. 12.

On the other hand, for an interior application such as a highway tunnel 17 shown in Figs. 13A and 13B (Fig. 13A is a front view, and Fig. 13B is a cross sectional view) or an underground street, the purifying material 13 is irradiated with an artificial light source 18 such as a photochemical fluorescent lamp. In the highway tunnel 17 shown in Figs. 13A and 13B, an air purifying chamber 19 is provided in an upper space, polluted air conducted by a blower 20 as indicated by the arrow is first dust-removed by an electric dust collector 21, and then treated with the purifying material 13 to remove nitrogen oxides and the like to be returned to the road space.

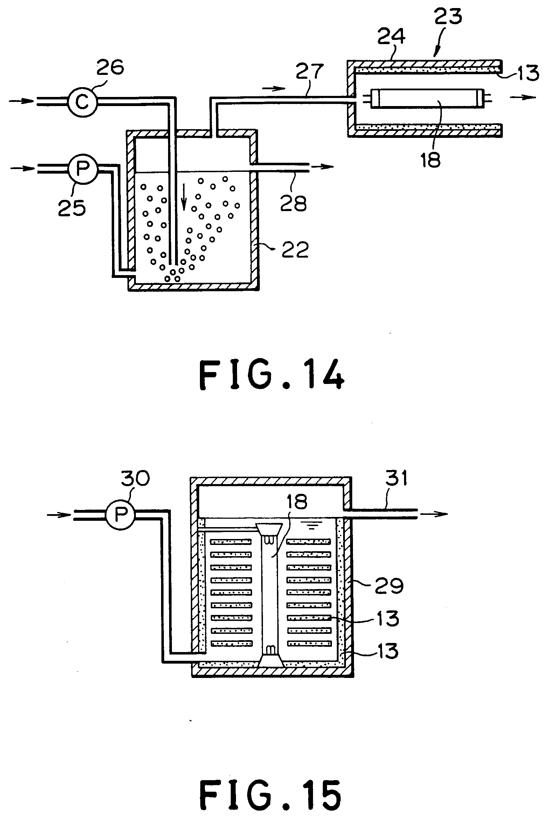

Then, an embodiment of the present invention is shown in Figs. 14 and 15 where volatile organic chlorine compounds are decomposed using the above purifying material. First, Fig. 14 shows the structure of an apparatus in which volatile organic chlorine compounds contained in water are transferred to a gas phase, and contacted with the purifying material to be decomposed. The apparatus comprises a stripping tank 22 for transferring volatile organic chlorine compounds contained in water to air, and a reactor 23 for contacting the air with the purifying material 13 to decompose. The reactor 23 is provided with the purifying material 13, which is produced by the above-described method using the photocatalyst comprising titanium dioxide (in this case, activated charcoal is unnecessary), stuck on the inner wall surface of an outer cylinder 24 having a square cross section, and the artificial light source 18 for emitting light of 400 nm or less in wavelength is disposed at the center of the outer cylinder 24.

In the apparatus shown, when water containing volatile organic chlorine compounds such as trichloroethene and tetrachloroethene is fed to the bottom of the stripping tank 22 by a pump 25, compressed air is blown into the water from a compressor 26 to transfer the volatile organic chlorine compounds to the air easily. The air is then sent to the reactor 23 through an air pipe 27, and contacts with the purifying material 13, whereby the volatile organic chlorine compounds are decomposed by titanium dioxide excited by the light from the light source 18, and then discharged from the reactor 23. The treated water is discharged through a waste water pipe 28. When exhaust gas containing vapors of volatile organic chlorine compounds is directly treated, the stripping tank 22 is unnecessary. In the present embodiment, since the purifying material 13 for carrying titanium dioxide particles is able to have a sufficient strength, it is hard to be broken, and easy to set up and handle. Further, pollutants treated by the method are not limited to volatile organic chlorine compounds, but may be those which are volatile and can be decomposed by titanium dioxide.

On the other hand, Fig. 14 shows the structure of an apparatus in which water containing pollutants is contacted directly with the purifying material to decompose the pollutants. Referring to the figure, the same purifying material 13 as in Fig. 13 is stacked at intervals surrounding the light source 18 at the center, or stuck on the inner wall surface, in a square cross sectioned reactor 29. Water, which contains volatile organic chlorine compounds, is fed to the bottom of the reactor 29 by a pump 30, contacts with the purifying material 13 to decompose the volatile organic chlorine compounds, and then the treated water is discharged through a waste water pipe 31. In the present embodiment, since titanium dioxide particles are fixed as a sheet or panel-shaped material, a precipitation tank for separating titanium dioxide from the treated water and a pump piping for sending the separated titanium dioxide back to the reactor are unnecessary. In this case, pollutants in water are not limited to volatile organic chlorine compounds, but may be those which are decomposed by titanium dioxide and nonvolatile.

With the present invention, by fixing the photocatalyst mainly comprising titanium dioxide or a mixture of titanium dioxide and activated charcoal in the outdoors where the photocatalyst is subjected to irradiation with sunlight and cleaning by rainfall, low-concentration noxious substances in the environmental atmosphere can be efficiently removed. Further, even when decomposition products are built up on the surface of the photocatalyst to lower the activity, such products are washed out by rainfall to restore the activity. Since, unlike various conventional measures, the inventive method does not require an external energy, coupled with inexpensiveness of titanium dioxide, activated charcoal, iron oxide, and the like, purifying of the environmental atmosphere can be achieved at extremely low material and operation costs with high practicality.

In this case, the photocatalyst powder can be molded using a synthetic resin to a sheet or panel-form, or stuck on the surface of a sheet or panel material with an adhesive to form a purifying material, thereby achieving very simple construction and handling.

In an overcrowding area such as big cities, there are very little spaces for constructing a new structure. In such a case, the purifying material is set up utilizing existing structures such as exterior walls of a building, sound insulation plates of a highway, and the like.

According to a calculation based on the experimental results, by applying the purifying material of the present invention on both sides of a crowded street of a city, the nitrogen oxide concentration is considered to be reduced by at least 20% as will be described below.

Assuming a 1-km section of a road of two lanes on one side (totally 4 lanes) where the traffic volume is 10,000 cars per hour, 2,500 g of nitrogen oxides are emitted (an average passenger car emits 0.25 g/km of nitrogen oxides).

On the other hand, suppose that average 12-story (40 m high) buildings are on both sides of the above road, when the purifying material of the present invention is stuck on the exterior wall of the buildings, assuming that the wall portion other than windows is 70%, and the wall of only one side of the road is applied with sunlight to function, the effective purifying material area is 28,000 m², and 500 g per hour of nitrogen oxides is adsorbed and decomposed by the surface area.

This corresponds to 20% of the above emissions, and achieves the same effect as a 20% reduction in traffic volume, tightening of exhaust gas control regulations by 20%, or a 20% introduction of exhaust less cars such as electric cars.

In an underground parking zone, underground street, underground passage, and the like where no sunlight can be directly obtained, the purifying material is disposed at the ventilation opening, or an artificial light source (such as a photochemical fluorescent lamp) is also used. Concentration of nitric acid and the like flowing out from the purifying material at rainfall is normally several µg to several ten µg per milliliter, which is nearly the same level as contained in natural precipitations, and is thus not considered to have adverse effects on the structures and sewage. Further, even though the catalyst scatters in environment, the ingredients are those which are present in nature, and thus have no danger of causing new environmental problems.

When volatile organic pollutants in water are transferred to a gas phase and contacted with titanium dioxide to be decomposed, titanium dioxide particles can be carried on a sheet or panel-shaped purifying material, thereby achieving the same advantages as removal of pollutants in the air. Further, also when pollutants in water are contacted directly with titanium dioxide to be decomposed, the above purifying material can be used, thereby eliminating the need for recovery of titanium dioxide particles from treated water, and enabling a simplified apparatus and easy operation control.

The present invention has been described in detail with respect to preferred embodiments, and it will now be that changes and modifications may be made without departing from the invention.

## Claims

1. A method for removing one or more pollutant(s) selected from the group consisting of NOₓ, SOₓ, and organic chlorinated compounds from fluids, wherein said pollutant(s) are photocatalytically contacted with a purifying material comprising a photocatalyst mainly consisting of titanium dioxide or a mixture of titanium dioxide and activated charcoal by exposure to radiation having a wavelength of 400 nm or less to decompose said pollutant(s), said purifying material consisting of a powder of said photocatalyst formed to a sheet, a rolled sheet or a panel with a fluororesin as the binder.

2. The method as claimed in claim 1, wherein said fluororesin is a fluorocarbon polymer, preferably a polytetrafluoroethylene polymer.

3. The method as claimed in any of claims 1 or 2, wherein said pollutant(s) is/are directly contacted with said purifying material.

4. The method as claimed in any of claims 1 to 3, wherein said fluid containing said pollutant(s) is an exhaust gas phase.

5. The method as claimed in any of claims 1 to 4, wherein said purifying material is exposed to said radiation in the outdoors and said radiation is sunlight.

6. The method as claimed in claim 5, wherein said purifying material is exposed to rinsing by rainfall to wash out decomposition products of said pollutant(s).

7. The method as claimed in any of the claims 1 to 4, wherein said purifying material is exposed to said radiation in a public traffic zone and said radiation is sunlight or an artificial light source.

8. The method as claimed in claim 1, wherein said pollutant(s) is/are present in water in a volatile form and is/are removed by the steps of
- transferring said pollutant(s) from the water phase into a gas phase; and
- contacting said gas phase with said purifying material while exposing it to said radiation to decompose said pollutant(s).

9. The method as claimed in claim 8, wherein said pollutant(s) is/are selected from the group consisting of clorinated alkenes, preferably trichloroethene and tetrachloroethene.

10. The method as claimed in claims 8 and 9, wherein said transfer of said volatile pollutant(s) from the water phase to the gas phase is carried out by stripping said water phase with air.

11. The method as claimed in any of claims 1 to 10, wherein said purifying material contains iron (III) oxide in addition.

## Patentansprüche

1. Verfahren zum Entfernen eines oder mehrerer Schadstoffe(s), der/die gewählt ist/sind aus der Gruppe, die besteht aus NOₓ, SOₓ und organischen chlorierten Verbindungen, aus Flüssigkeiten, worin der/die Schadstoff(e) photokatalytisch in Kontakt mit einem reinigenden Material gebracht werden, das einen Photokatalysator umfaßt, der hauptsächlich aus Titandioxid oder einer Mischung aus Titandioxid und Aktivkohle besteht, durch Bestrahlen mit Strahlung mit einer Wellenlänge von 400 nm oder weniger unter Zersetzung des/der Schadstoffe(s), wobei das reinigende Material aus einem Pulver des Photokatalysators besteht, das zu einer Platte, einem Walzblech oder einem Paneel mit einem Fluorharz als Bindemittel geformt ist.

2. Verfahren nach Anspruch 1, worin das Fluorharz ein Fluorkohlenstoff-Polymer ist, vorzugsweise ein Polytetrafluorethylen-Polymer.

3. Verfahren nach einem der Ansprüche 1 oder 2, worin der/die Schadstoff(e) direkt mit dem reinigenden Material in Kontakt gebracht wird/werden.

4. Verfahren nach einem der Ansprüche 1 bis 3, worin das Fluid, das den/die Schadstoff(e) enthält, eine Abgas-Phase ist.

5. Verfahren nach einem der Ansprüche 1 bis 4, worin das reinigende Material der Strahlung im Außenbereich ausgesetzt wird und die Strahlung Sonnerlicht ist.

6. Verfahren nach Anspruch 5, worin das reinigende Material einem Schritt des Spülens durch Regen ausgesetzt wird und so Zersetzungsprodukte des/der Schadstoffe(s) ausgewaschen werden.

7. Verfahren nach einem der Ansprüche 1 bis 4, wobei das reinigende Material der Strahlung in einer öffentlichen Verkehrszone ausgesetzt wird und die Strahlung Sonnenlicht oder eine künstliche Lichtquelle ist.

8. Verfahren nach Anspruch 1, worin der/die Schadstoff(e) in Wasser in flüchtiger Form zugegen ist/sind und entfernt wird/werden durch die Schritte, daß man
- den/die Schadstoff(e) aus der Wasser-Phase in eine Gas-Phase überführt; und
- die Gas-Phase mit dem reinigenden Material in Kontakt bringt, während man es der Strahlung aussetzt und so den/die Schadstoff(e) zersetzt.

9. Verfahren nach Anspruch 8, worin der/die Schadstoff(e) gewählt ist/sind aus der Gruppe, die besteht aus chlorierten Alkenen, vorzugsweise Trichlorethen und Tetrachlorethen.

10. Verfahren nach den Ansprüchen 8 und 9, worin die Überführung des/der flüchtigen Schadstoffe(s) von der Wasser-Phase in die Gas-Phase durchgeführt wird durch Strippen der Wasser-Phase mit Luft.

11. Verfahren nach einem der Ansprüche 1 bis 10, worin das reinigende Material zusätzlich Eisen (III)-oxid enthält.

## Revendications

1. Procédé pour éliminer un ou plusieurs polluant(s) choisi(s) dans le groupe consistant en NOₓ, SOₓ et en composés organiques chlorés dans des fluides, dans lequel le(s) polluant(s) entre(nt) en contact photocatalytique avec un matériau de purification comprenant un photocatalyseur consistant principalement en dioxyde de titane ou un mélange de dioxyde de titane et de charbon actif par exposition à un rayonnement ayant une longueur d'onde de 400 nm ou moins de 400 nm pour décomposer le(s) polluant(s), le matériau de purification consistant en une poudre du photocatalyseur conformée en une feuille, en une feuille roulée ou en un panneau ayant une résine fluorée comme liant.

2. Procédé suivant la revendication 1, dans lequel la résine fluorée est un polymère fluorocarboné, de préférence un polymère de polytétrafluoréthylène.

3. Procédé suivant l'une quelconque des revendications 1 et 2, dans lequel le(s) polluant(s) est/sont directement en contact avec le matériau de purification.

4. Procédé suivant l'une quelconque des revendications 1 à 3, dans lequel le fluide contenant le(s) polluant(s) est un gaz d'échappement.

5. Procédé suivant l'une quelconque des revendications 1 à 4, dans lequel le matériau de purification est exposé au rayonnement à l'extérieur et le rayonnement est la lumière solaire.

6. Procédé suivant la revendication 5, dans lequel le matériau de purification est exposé au rinçage par la pluie pour éliminer par lavage des produits de décomposition du/des polluant(s).

7. Procédé suivant l'une quelconque des revendications 1 à 4, dans lequel le matériau de purification est exposé au rayonnement dans une zone de circulation publique et le rayonnement est la lumière solaire ou une source de lumière artificielle.

8. Procédé suivant la revendication 1, dans lequel le(s) polluant(s) est/sont présent(s) dans l'eau sous une forme volatile et est/sont éliminé(s) par les étapes de :
- transfert du/des polluant(s) de la phase aqueuse dans une phase gazeuse; et
- mise en contact de la phase gazeuse avec le matériau de purification tout en l'exposant au rayonnement pour décomposer le(s) polluant(s).

9. Procédé suivant la revendication 8, dans lequel le(s) polluant(s) est/sont choisi(s) dans le groupe consistant en alcènes chlorés, de préférence le trichloréthylène et le tétrachloréthylène.

10. Procédé suivant les revendications 8 et 9, dans lequel le transfert du/des polluant(s) volatil(s) de la phase aqueuse à la phase gazeuse est réalisé par entraînement de la phase aqueuse par de l'air.

11. Procédé suivant l'une quelconque des revendications 1 à 10, dans lequel le matériau de purification contient de l'oxyde de fer (III) en plus.
